# EUROPEAN PATENT SPECIFICATION

(11) **EP 2 192 330 B1**
(45) Date of publication and mention of the grant of the patent: **07.12.2011**
(21) Application number: 09176549.5
(22) Date of filing: 19.11.2009
(51) Int. Cl.: F16H 59/70

(54) **Transmission shift rail position sensor**
Schaltschienenpositionssensor für Getriebe
Capteur de position de rail de changement de rapport

(30) Priority: 26.11.2008 US 323876
(43) Date of publication of application: 02.06.2010
(73) Proprietor: DEERE & COMPANY, Moline, Illinois 61265-8098 (US)
(72) Inventor: Wenzel, Gary Herman, Cedar Falls, IA 50613-8201 (US); DeFord, Nathan Paul, Hudson, IA 50643 (US)
(74) Representative: Dehnhardt, Florian Christopher

(56) References cited:
- EP-A- 1 617 109
- DE-A1-102007 050 531
- GB-A- 2 277 784
- US-A- 5 035 113
- US-A- 5 193 410

## Description

The present invention relates to a shift rail position sensing system in a transmission shift mechanism.

Certain large production tractors have transmissions which are shiftable among a plurality of shift or gear ranges. For example, on transmissions used in John Deere 7030 large-frame tractors, range shifts among five ranges are performed with a manually-actuated clutch arrangement.

It is proposed to perform such shifts electronically with a mechanism which includes a range-selection-shaft or shift rail which is axially moved to control the meshing of synchronizers and gears. The synchronizers and gears are fully meshed only within the last 1.0 millimeters of rail travel. It is therefore necessary to accurately sense the position of a shift rail in order to prevent clutch engagement before the synchronizers are fully engaged with gears. Therefore, a position sensing system is needed to sense when the shift rail has successfully made the transition into the selected range.

Document GB2277784 discloses a transmission shift mechanism according to the preamble of claim 1.

Because the shift rail must travel through a total distance of approximately 20 millimeters, it is not possible to accurately sense shift rail position throughout the entire travel range using a conventional inductive or Hall effect position sensor inline with the shift rail. Also, geometry constraints limit access to the end of the shift rail. Thus, a position sensing system is needed which is displaced radially from the shift rail, and which can rapidly and accurately sense when the shift rail is within the last 1.0 millimeters of rail travel.

Accordingly, an object of this invention is to provide a shift rail position sensing system in a transmission shift mechanism for accurately and rapidly sense the position of the shift rail.

These and other objects are achieved by the present invention, which relates to a shift rail position sensing system in a transmission shift mechanism in which shifts are selected by axially moving a shift rail which is slidable in a rail bore in a housing. The shift rail position sensing system comprising a groove formed in the shift rail and a Hall effect position sensor. The groove includes a bottom center surface, a first flat ramp surface extending from one side of the bottom center surface to an outer peripheral surface of the shift rail, and a second flat ramp surface extending from a second side of the bottom center surface to the outer peripheral surface of the shift rail. The Hall effect position sensor has a sensor shaft having an axis which is perpendicular to an axis of the shift rail. The sensor shaft has a sensing tip which is adjacent to and spaced apart from the groove, so that the Hall effect position sensor is sensitive to an entire range of positions of the shift rail.

For a complete understanding of the objects, techniques, and structure of the invention reference should be made to the following detailed description and accompanying drawings, wherein similar components are designated by identical reference numerals:
- Fig. 1: is a perspective sectional view of a portion of a transmission shift mechanism embodying the invention,
- Fig. 2: is an enlarged detailed sectional view of a shift rail being part of the transmis- sion shift mechanism according to Fig. 1, and
- Fig. 3: is a sectional view of the shift rail according to Fig. 2 taken along intersection line 3-3.

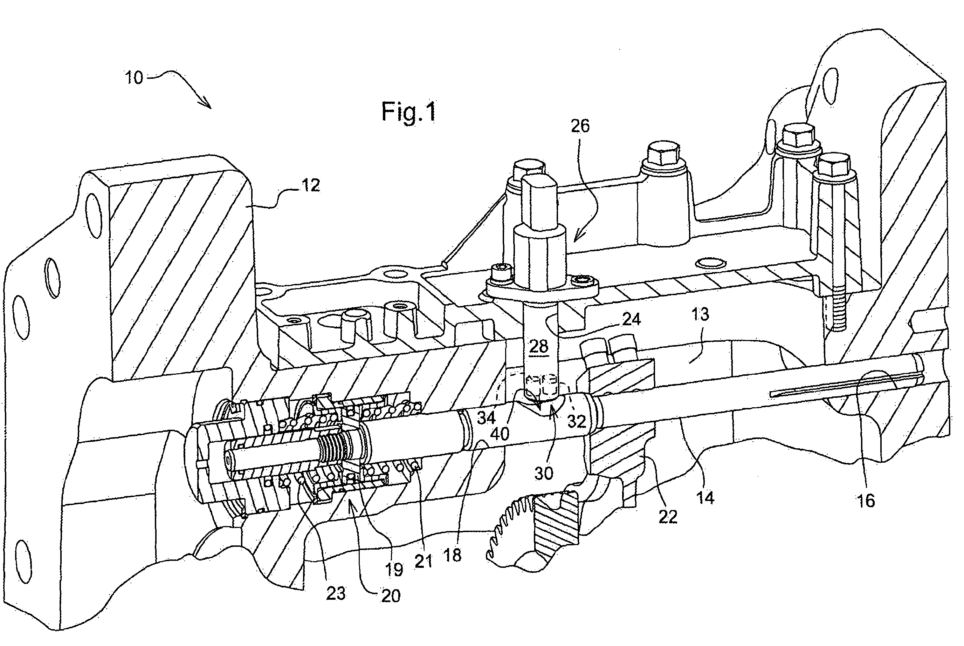

Referring to Fig. 1, a transmission shift mechanism 10 includes a hollow housing 12 which encloses a plurality of range selector or shift rails 14, one of which is shown in Fig. 1. The shift rail 14 slides over a distance of approximately 20 millimeters in rail bores 16 and 18 formed in the housing 12. The movement of the shift rail 14 is controlled by a hydraulic actuator 20. A shift fork 22 is fixed to a central part of the shift rail 14. The shift fork 22 operatively engages with transmission gears (not shown). The hydraulic actuator 20 includes a piston 19 attached to an end of the shift rail 14. Hydraulic pressure will be supplied to either side of the piston 19 to move the shift rail 14 to the desired position. When pressure is not applied to the piston 19, the shift rail 14 is held in a neutral position by springs 21 and 23. The housing 12 forms a chamber 13. The shift fork 22 is attached to the shift rail 14 within the chamber 13.

The housing 12 also forms a sensor bore 24. The sensor bore 24 has an axis which intersects the shift rail 14, and is preferably oriented perpendicularly with respect to the longitudinal axis of the shift rail 14 and rail bores 16 and 18. The sensor bore 24 intersects or opens into the chamber 13. A Hall effect position sensor 26 is threadably mounted by means of its sensor shaft 28 in the sensor bore 24. Hall effect position sensor 26 includes a cylindrical housing or sensor shaft 28 which extends towards the shift rail 14. As is well known, inside the sensor shaft 28 and near an inner end or sensing tip 30 is mounted a permanent magnet 32 and a Hall effect sensor element 34. The Hall effect sensor element 34 is preferably analog and back-biased. A recess or groove 40 is formed in the side of the shift rail 14 in close proximity to the sensing tip 30 of the sensor shaft 28.

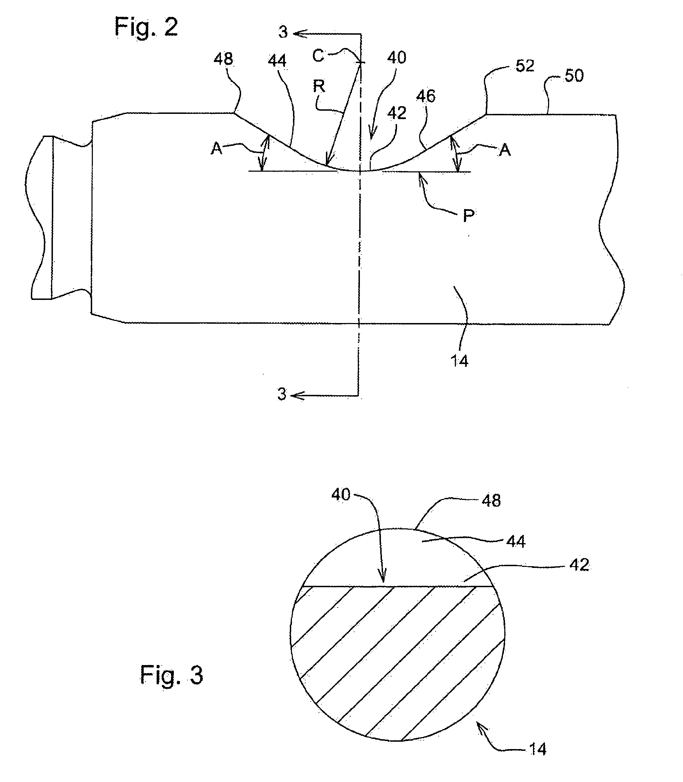

As best seen in Figs. 2 and 3, the groove 40 is preferably symmetrical about a central plane P. Bottom center surface 42 of the groove 40 may be flat or curved. Preferably, bottom center surface 42 is curved and upwardly concave. The groove 40 also includes a first flat ramp surface 44 and a second flat ramp surface 46. The center bottom surface 42 has a center of curvature C located in central plane P and a radius of curvature R of preferably about 11.25 millimeters. The first and second flat ramp surfaces 44 and 46 are oriented at an angle A of preferably approximately 33 degrees with respect to a main axis of the shift rail 14. The first and second flat ramp surfaces 44 and 46 extend from the bottom center surface 42 to first and second outer edges 48 and 52 which intersect or join with outer peripheral surface 50 of the shift rail 14. The distance between the first and second outer edges 48 and 52 is preferably about 25.72 millimeters, and should be about the same as the maximum distance the shift rail 14 travels over as it moves the shift fork 22 to perform transmission shifts. In other words, the groove 40 is bordered by the first and second outer edges 48 and 52, wherein the first and second outer edges 48 and 42 are spaced apart by a distance which is similar a shift distance through which the shift rail 14 moves as a transmission shift is performed.

Surfaces 42, 44 and 46 are preferably formed by a milling operation. The exact shape and dimensions of the groove 40 can be adapted for different applications.

The poles of the permanent magnet 32 are preferably located along the major axis of the sensor shaft 28, perpendicular to the nominal outside diameter of the shift rail 14. The permanent magnet 32 has a magnetic field through which extends the portion of the shift rail 14 which includes the groove 40, so that movement of the shift rail 14 produces changes in the magnetic field. As the shift rail 14 moves left and right relative to the Hall effect position sensor 26 the air gap between the Hall effect position sensor 26 and the contour of the groove 40 varies. Air gap changes create varying levels of magnetic flux density at the Hall effect sensor element 34, and the latter modulates its output voltage based on the flux density at the Hall effect sensor element 34. This position signal generated by Hall effect sensor element 34 can be used by a transmission controller (not shown) as follows: The transmission controller will disengage a traction clutch (not shown) before the transmission shift mechanism 10 is commanded to perform a range shift. After the range shift is finished the clutch will modulate back to system pressure. The time to complete a shift will depend on current range and commanded range, temperature, top shaft RPM, wheel speed, and load. With the above described shift rail position sensing system, the position of the grooves in each shift rail can be accurately and quickly monitored so that the clutch can be engaged immediately after the shift has been completed. This feedback will minimize the amount of delay of clutch engagement for all conditions.

The resulting shift rail position sensing system is impervious to wear affects because there are no points of contact between the Hall effect position sensor and the shift rail. This sensing system also provide a continuous, rather than a discrete or step-wise output signal. Also, this sensing system does not require unusually tight positional tolerances between the shift rail and the Hall effect position sensor. This capability directly reduces manufacturing costs as machining tolerances are not excessively small.

## Claims

1. A transmission shift mechanism with a shift rail position sensing system in which shifts are selected by axially moving a shift rail (14) which is slidable in a rail bore (16, 18) in a housing (12), wherein the system comprising a Hall effect position sensor (26) having a sensor shaft (28) having an axis which is perpendicular to an axis of the shift rail (14), **characterized in that** the system further comprising a groove (40) formed in the shift rail (14), the groove (40) including a curved and upwardly concave bottom center surface (42), a first flat ramp surface (44) extending from a first side of the bottom center surface (42) to an outer peripheral surface (50) of the shift rail (14), and a second flat ramp surface (46) extending from a second side of the bottom center surface (42) to the outer peripheral surface (50) of the shift rail (14), wherein the sensor shaft (28) having a sensing tip (30) which is adjacent to and spaced apart from the groove (40), so that the Hall effect position sensor (26) is sensitive to an entire range of positions of the shift rail (14).

2. The transmission shift mechanism according to claim 1, **characterized in that** the bottom center surface (42) and the first and second flat ramp surfaces (44, 46) are formed by a milling operation.

3. The transmission shift mechanism according to claims 1 to 2, **characterized in that** the housing (12) forms a sensor bore (24) oriented perpendicularly with respect to the rail bore (16, 18), and the sensor shaft (28) is mounted in said sensor bore (24).

4. The transmission shift mechanism according to claims 1 to 3, **characterized in that** the housing (12) forms a chamber (13), and the sensor bore (24) intersects into the chamber (13).

5. The transmission shift mechanism according to claims 1 to 4, **characterized in that** the groove (40) is bordered by first and second outer edges (48, 52), and said first and second outer edges (48, 42) are spaced apart by a distance which is similar a shift distance through which the shift rail (14) moves as a transmission shift is performed.

6. The transmission shift mechanism according to claims 1 to 5, **characterized in that** a permanent magnet (32) is mounted inside the sensor shaft (28) near the sensing tip (30), the permanent magnet (32) having a magnetic field through which extends the portion of the shift rail (14) which includes the groove (40), movement of the shift rail (14) producing changes in the magnetic field; and a Hall effect sensor element (34) is mounted inside the sensor shaft (28) near the sensing tip (30) so that the Hall effect position sensor (26) detects changes in said magnetic field through an entire range of positions of the shift rail (14).

## Patentansprüche

1. Getriebeschaltmechanismus mit einem Schaltschienenpositionserfassungssystem, in dem Gangwechsel durch axiales Bewegen einer Schaltschiene (14) ausgewählt werden, welche in einer Schienenbohrung (16, 18) in einem Gehäuse (12) verschiebbar ist, wobei das System einen Halleffekt-Positionssensor (26) mit einem Sensorschaft (28) umfasst, der eine senkrecht zu einer Achse der Schaltschiene (14) verlaufende Achse aufweist, **dadurch gekennzeichnet, dass** das System weiterhin eine in der Schaltschiene (14) ausgebildete Nut (40) umfasst, wobei die Nut (40) eine gekrümmte und nach oben konkave mittlere Grundfläche (42), eine erste flache Rampenfläche (44), die sich von einer ersten Seite der mittleren Grundfläche (42) zu einer Außenumfangsfläche (50) der Schaltschiene (14) erstreckt, und eine zweite flache Rampenfläche (46), die sich von einer zweiten Seite der mittleren Grundfläche (42) zu der Außenumfangsfläche (50) der Schaltschiene (14) erstreckt, umfasst, wobei der Sensorschaft (28) eine Tastspitze (30) aufweist, die sich neben der Nut (40) befindet und von ihr beabstandet ist, so dass der Halleffekt-Positionssensor (26) für einen ganzen Stellungsbereich der Schaltschiene (14) empfindlich ist.

2. Getriebeschaltmechanismus nach Anspruch 1, **dadurch gekennzeichnet, dass** die mittlere Grundfläche (42) und die erste und die zweite flache Rampenfläche (44, 46) durch einen Fräsvorgang hergestellt werden.

3. Getriebeschaltmechanismus nach den Ansprüchen 1 bis 2, **dadurch gekennzeichnet, dass** das Gehäuse (12) eine Sensorbohrung (24) bildet, die senkrecht zu der Schienenbohrung (16, 18) ausgerichtet ist, und der Sensorschaft (28) in der Sensorbohrung (24) angebracht ist.

4. Getriebeschaltmechanismus nach den Ansprüchen 1 bis 3, **dadurch gekennzeichnet, dass** das Gehäuse (12) eine Kammer (13) bildet und die Sensorbohrung (24) die Kammer (13) schneidet.

5. Getriebeschaltmechanismus nach den Ansprüchen 1 bis 4, **dadurch gekennzeichnet, dass** die Nut (40) durch einen ersten und einen zweien Außenrand (48, 52) begrenzt wird und der erste und der zweite Außenrand (48, 42) in einem Abstand voneinander angeordnet sind, der ähnlich einer Schaltstrecke ist, über die sich die Schaltschiene (14) bei Durchführung einer Getriebeschaltung bewegt.

6. Getriebeschaltmechanismus nach den Ansprüchen 1 bis 5, **dadurch gekennzeichnet, dass** ein Permanentmagnet (32) in dem Sensorschaft (28) nahe der Messspitze (30) angebracht ist, wobei der Permanentmagnet (32) ein magnetisches Feld aufweist, durch das sich der Teil der Schaltschiene (14) erstreckt, der die Nut (40) enthält, wobei eine Bewegung der Schaltschiene (14) Änderungen des magnetischen Feldes erzeugt; und ein Halleffekt-Sensorelement (34) in dem Sensorschaft (28) nahe der Messspitze (30) angebracht ist, so dass der Halleffekt-Positionssensor (26) Änderungen des magnetischen Feldes durch einen ganzen Stellungsbereich der Schaltschiene (14) erfasst.

## Revendications

1. Mécanisme de changement de rapport de transmission comprenant un système de capteur de position de rail de changement de rapport, dans lequel des changements de rapports sont sélectionnés en déplaçant axialement un rail de changement de rapport (14) qui peut glisser dans un orifice de rail (16, 18) dans un boîtier (12), le système comprenant un capteur de position à effet de Hall (26) ayant une tige de capteur (28) ayant un axe qui est perpendiculaire à un axe du rail de changement de rapport (14), **caractérisé en ce que** le système comprend en outre une gorge (40) formée dans le rail de changement de rapport (14), la gorge (40) comportant une surface centrale inférieure courbe et concave vers le haut (42), une première surface de rampe plate (44) s'étendant depuis un premier côté de la surface centrale inférieure (42) jusqu'à une surface périphérique extérieure (50) du rail de changement de rapport (14), et une deuxième surface de rampe plate (46) s'étendant depuis un deuxième côté de la surface centrale inférieure (42) jusqu'à la surface périphérique extérieure (50) du rail de changement de rapport (14), la tige de capteur (28) ayant une pointe de capteur (30) qui est adjacente à la gorge (40) et espacée de celle-ci, de telle sorte que le capteur de position à effet de Hall (26) soit sensible à une plage complète de positions du rail de changement de rapport (14).

2. Mécanisme de changement de rapport de transmission selon la revendication 1, **caractérisé en ce que** la surface centrale inférieure (42) et les première et deuxième surfaces de rampe plates (44, 46) sont formées par une opération de fraisage.

3. Mécanisme de changement de rapport de transmission selon les revendications 1 et 2, **caractérisé en ce que** le boîtier (12) forme un orifice de capteur (24) orienté perpendiculairement par rapport à l'orifice de rail (16, 18) et la tige de capteur (28) est montée dans ledit orifice de capteur (24).

4. Mécanisme de changement de rapport de transmission selon l'une quelconque des revendications 1 à 3, **caractérisé en ce que** le boîtier (12) forme une chambre (13), et l'orifice de capteur (24) coupe la chambre (13).

5. Mécanisme de changement de rapport de transmission selon l'une quelconque des revendications 1 à 4, **caractérisé en ce que** la gorge (40) est bordée par des premier et deuxième bords extérieurs (48, 52) et lesdits premier et deuxième bords extérieurs (48, 42) sont espacés d'une distance qui est similaire à une distance de changement de rapport que le rail de changement de rapport (14) parcourt lors de la réalisation d'un changement de rapport de la transmission.

6. Mécanisme de changement de rapport de transmission selon l'une quelconque des revendications 1 à 5, **caractérisé en ce qu'**un aimant permanent (32) est monté à l'intérieur de la tige de capteur (28) près de la pointe de capteur (30), l'aimant permanent (32) ayant un champ magnétique à travers lequel s'étend la portion du rail de changement de rapport (14) qui inclut la gorge (40), le mouvement du rail de changement de rapport (14) produisant des changements dans le champ magnétique ; et un élément de capteur à effet de Hall (34) est monté à l'intérieur de la tige de capteur (28) près de la pointe de capteur (30) de telle sorte que le capteur de position à effet de Hall (26) détecte des changements dudit champ magnétique sur toute une plage de positions du rail de changement de rapport (14).
